# EUROPÄISCHE PATENTANMELDUNG

(11) **EP 4 018 888 A1**
(43) Veröffentlichungstag der Anmeldung: **29.06.2022**
(21) Anmeldenummer: 21208742.3
(22) Anmeldetag: 17.11.2021
(51) Int. Cl.: A47J 31/60

(54) **VERFAHREN ZUR PFLEGE EINES HEISSGETRÄNKEZUBEREITUNGSAUTOMATEN UND PFLEGEMITTELBEHÄLTER DAFÜR**

(30) Priorität: 14.12.2020 DE 102020215848
(71) Anmelder: BSH Hausgeräte GmbH, 81739 München (DE)
(72) Erfinder: Mies, Maximilian, 83253 Rimsting (DE); Quittek, Benno, 83278 Traunstein (DE); Steffl, Michael, 83250 Marquartstein (DE)

(57) **Zusammenfassung**

Die Erfindung betrifft ein Verfahren zur Pflege eines Heißgetränkezubereitungsgeräts für den Hausgebrauch, mit einem Wasservorratstank, mit einer Steuerungseinrichtung, mit einer Datenspeichereinrichtung und mit einem separaten Behälter für Pflegemittel, der als Pflegemittelvorratsgefäß ausgebildet ist, mit den Schritten
a) Initiieren der Herstellung einer Pflegemittellösung in dem separaten Behälter,
b) Abruf eines während des Getränkezubereitungsbetriebs erfassten Betriebsparameters,
c) Berechnen mindestens eines Prozessparameters zur Herstellung der Pflegemittellösung auf Basis des Betriebsparameters,
d) Erstellen der Pflegemittellösung im Pflegemittelvorratsgefäß mit einer definierten Konzentration des Pflegemittels, die signifikant unterhalb der Sättigungskonzentration liegt,
e) Durchführen des Pflegeprozesses unter Zugabe der Pflegemittellösung in ein Leitungssystem des Heißgetränkezubereitungsgeräts
sowie einen dafür geeigneten Behälter für Pflegemittel und ein Heißgetränkezubereitungsgerät mit einem derartigen Behälter und eingerichtet zur Durchführung des Verfahrens.

## Beschreibung

Die Erfindung betrifft ein Verfahren zur Pflege, insbesondere zur Reinigung und Entkalkung eines Heißgetränkezubereitungsautomaten, insbesondere eines Kaffeevollautomaten (KVA), und einen dafür geeigneten Pflegemittelbehälter.

Die DE 10 2013 106 148 A1 zeigt und beschreibt ein Strömungsleitungssystem für Fluide, geeignet für den Einsatz in einem Getränkebereiter, umfassend einen Wasser befüllbaren Wasserbehälter, eine Pumpe zum Fördern des Wassers durch Leitungsabschnitte und Komponenten des Strömungsleitungssystems, eine Heizeinrichtung zum Erhitzen des Wassers, eine Ventilanordnung, eine Entnahmeeinrichtung und eine Entkalkungsvorrichtung mit einem Vorratsbehälter zur Vorhaltung eines wasserlöslichen oder eine Lösung bildenden Entkalkungsmittels und eine weitere Ventilanordnung zur fluidischen Verbindung der Entkalkungsvorrichtung mit dem Strömungsleitungssystem. Um die automatische Entkalkung zu verbessern, ist eine Steuereinrichtung zur Ansteuerung der Pumpe vorgesehen, die dazu eingerichtet ist, die Pumpe während einer Phase zum Entkalken des Strömungsleitungssystems mit einer geringeren Förderleitung gegenüber der Nennförderleistung, wie sie für die Getränkezubereitung vorgesehen ist, zu betreiben.

Die DE 10 2016 100 740 A1 beschreibt einen Heißgetränkebereiter mit einer Reinigungsvorrichtung, bei der sich eine Reinigerkonzentration in Abhängigkeit eines von einem Benutzer an einer Nutzerschnittstelle eingegebenen Einstellparameters für den Fettgehalt der verwendeten Milch einstellt.

Die Aufgabe der vorliegenden Erfindung besteht darin, Pflegevorgänge in Heißgetränkezubereitungseinrichtungen zu optimieren und potenzielle Gefährdungen aus der Notwendigkeit von Pflegeverfahren zu reduzieren.

Diese Aufgabe wird erfindungsgemäß durch das im Folgenden beschriebene Verfahren zur Pflege eines Heißgetränkezubereitungsgeräts für den Hausgebrauch, insbesondere eines Kaffeevollautomaten gelöst, wobei das Heißgetränkezubereitungsgerät einen Wasservorratstank, eine Steuerungseinrichtung, eine Datenspeichereinrichtung und zumindest einen separaten Behälter für Pflegemittel bzw. mindestens ein Pflegemittelvorratsgefäß aufweist. Das erfindungsgemäße Verfahren umfasst zumindest die folgenden Schritte:
a) Initiieren der Herstellung einer Pflegemittellösung im Pflegemittelvorratsgefäß,
b) Abruf eines während des Getränkezubereitungsbetriebs erfassten Betriebsparameters aus der Datenspeichereinrichtung bzw. aus dem Datenspeicher,
c) Berechnen mindestens eines Prozessparameters zur Herstellung der Pflegemittellösung auf Basis des Betriebsparameters,
d) Erstellen der Pflegemittellösung im Pflegemittelvorratsgefäß mit einer definierten Konzentration des Pflegemittels, die signifikant unterhalb der Sättigungskonzentration liegt,
e) Durchführen des Pflegeprozesses unter Abgabe der Pflegemittellösung in ein zu pflegendes Leitungssystem des Heißgetränkezubereitungsgeräts.

Das Verfahren beruht auf der Herstellung einer Pflegemittellösung aus Zubereitungswasser und einem Pflegemittel, das in fester Form, zum Beispiel in Tabletten- oder Pulverform, in einem Pflegemittelvorratsgefäß bevorratet wird. Unter der Pflege ist sowohl ein Entkalken als auch ein Reinigen der fluidführenden Abschnitte und Einrichtungen des Heißgetränkezubereitungsgeräts zu verstehen. Die beiden zugehörigen Pflegevorgänge können gemeinsam durchgeführt werden, wofür ein separater Behälter für Pflegemittel, nämlich ein vom Vorratstank für Zubereitungswasser verschiedener Behälter, genügen kann. Ein effizienterer Pflegevorgang kann ein Entkalken und ein separates Reinigen umfassen, weil dann die Entkalkungslösung einerseits und die Reinigungslösung andererseits hinsichtlich ihrer Konzentration und Menge genauer und unabhängig voneinander auf den jeweiligen Pflegebedarf hin eingestellt werden können. Dafür sind dann zwei getrennte Pflegemittelvorratsgefäße vorzusehen.

In einem ersten Schritt a) wird grundsätzlich die Herstellung einer Pflegemittellösung im Pflegemittelvorratsgefäß initiiert. Die dafür erforderlichen Maßnahmen wie die Feststellung eines Pflegebedarfs, eines geeigneten Zeitpunkts für das Durchführen der Pflege und dergleichen sind Gegenstand einer späteren Erläuterung.

In einem weiteren Schritt b) wird zumindest ein relevanter Betriebsparameter aus der Datenspeichereinrichtung abgerufen, der während des vorherigen Getränkezubereitungsbetriebs und seit dem letzten Pflegevorgang erfasst wurde. Als Parameter kann eine Anzahl an seitdem hergestellten Tassenportionen dienen. Wegen der unterschiedlichen Portionsgrößen von Getränken kann zusätzlich die Erfassung der Getränkeart und evtl. der Bedarf an Heißwasser oder Dampf relevant sein. Alternativ kann die Durchflussmenge an Zubereitungswasser erfasst werden, weil sie einen wesentlichen Einfluss auf den Pflegebedarf hat. Dabei kann auch ein vorher eingestellter Wasserhärtegrad berücksichtigt werden

Der Pflegevorgang selbst lässt sich mit verschiedenen Prozessparametern beschreiben und steuern, die in der Steuereinrichtung ermittelt werden. In einem Schritt c) wird nun auf der Basis des vorher abgerufenen Betriebsparameters mindestens ein Prozessparameter zur Herstellung der Pflegemittellösung berechnet. Die Herstellung der Pflegemittellösung erfolgt also nicht pauschal für alle Pflegevorgänge in gleicher Weise, und damit sicherheitshalber überdosiert, sondern orientiert sich an dem oder den erfassten Betriebsparameter(n) und damit am konkreten Pflegebedarf.

Anschließend wird in einem Schritt d) die Pflegemittellösung anhand der berechneten Prozessparameter im Pflegemittelvorratsbehälter selbst hergestellt, und zwar aus dem trockenen bevorrateten Pflegemittel und sofort und unmittelbar in der erforderlichen Konzentration. Dazu wird eine genau berechnete Menge an Zubereitungswasser mit dem trockenen Pflegemittel gezielt in Kontakt gebracht, um genau die gewünschte Konzentration der daraus resultierenden Pflegemittellösung zu erhalten.

Anders als im Stand der Technik befindet sich also im Heißgetränkezubereitungsgerät keine konzentrierte oder gesättigte Pflegemittellösung, die anschließend auf ein erforderliches Maß verdünnt wird. Vielmehr wird die Pflegemittellösung erfindungsgemäß durch einen exakt bestimmten Kontakt von Zubereitungswasser mit dem als Feststoff vorliegenden Pflegemittel hergestellt, und zwar ohne Umwege über eine gesättigte und zu verdünnende Lösung, sondern unmittelbar in der ermittelten und notwendigen, aber auch ausreichenden Konzentration. Sie liegt regelmäßig deutlich unterhalb der Sättigungskonzentration. Damit lässt sich einerseits der Einsatz an Wasser reduzieren, womit der Benutzer des Heißgetränkezubereitungsgeräts weniger Zubereitungswasser nachfüllen muss. Auch der Pflegemitteleinsatz erfolgt genauer dosiert und damit sparsamer, womit die zeitliche Reichweite des Pflegemittels steigt, der Benutzer seltener nachfüllen muss und auch dadurch weniger benutzerseitiger Bedienungsaufwand anfällt.

Andererseits liegt zu keinem Zeitpunkt überhaupt eine gesättigte, aggressive und damit potenziell gesundheitsgefährdende Lösung im Heißgetränkezubereitungsgerät vor. Damit ist die Gefahr einer gesundheitlichen Beeinträchtigung durch eine hochkonzentrierte Pflegemittellösung zum Beispiel infolge von Fehlbedienungen oder von Fehlfunktionen ausgeschlossen.

Schließlich kann die exakt auf den ermittelten Pflegebedarf abgestimmte Pflegemittellösung mangels Überdosierung das fluidführende Material des Heißgetränkezubereitungsgeräts weniger angreifen, womit es geschont wird.

In einem weiteren Schritt e) wird nun der Pflegeprozess unter Abgabe der Pflegemittellösung in das zu pflegende Leitungssystem, also in die fluidführenden Abschnitte und Einrichtungen des Heißgetränkezubereitungsgeräts in an sich bekannter Weise durchgeführt.

Grundsätzlich kann der oder können die Prozessparameter in Schritt c) über einen Vergleich mit tabellarisch hinterlegten und den entsprechenden Betriebsparametern zugeordneten Parametern gewonnen werden. Nach einer vorteilhaften Ausgestaltung der Erfindung erfolgt die Berechnung des mindestens einen Prozessparameters in Schritt c) in den folgenden Teilschritten:
c1) Abruf zumindest eines werkseitig, nämlich in der Datenspeichereinrichtung hinterlegten Standardparameters,
c2) Vergleich des mindestens einen, bereits vorher abgerufenen Betriebsparameters mit einem werkseitig hinterlegten Soll-Wert ,
c3) Ermitteln des mindestens einen Prozessparameters aus dem Vergleich in Schritt c2).

Standardparameter gemäß Schritt c1) dienen der Definition eines Standardprozesses, der geräteseitig abgespeichert ist. Als Standardprozesse können beispielsweise ein Entkalkungsprozess, ein Reinigungsprozess und ein kombinierter Reinigungs- und Entkalkungsprozess im Datenspeicher hinterlegt sein. Jeder Standardprozess kann durch Standardparameter wie ein Volumen für das Pflegemittel, eine Dosiermenge, eine Prozesszeit und dergleichen bestimmt sein und stützt sich auf bestimmte Soll-Werte, die eine Ausgangssituation des Standardprozesses beschreiben. Die Standardparameter können ggf. durch konkret ermittelte Prozessparameter ersetzt werden, um den jeweiligen Standardprozess auf den per Betriebsparameter erfassten Pflegebedarf einzustellen.

In Schritt c2) wird nun ein bereits vorher, nämlich in Schritt b) abgerufener Betriebsparameter als Ist-Wert mit einem ihm entsprechenden werkseitig im Datenspeicher hinterlegten Soll-Wert verglichen. Der Vergleich liefert eine Abweichung des Betriebsparameters vom Soll-Wert als Ausganspunkt für den folgenden Schritt c3).

Das Ermitteln im Schritt c3) kann beispielsweise ein betragsmäßiges Erhöhen des Prozessparameters in demselben Verhältnis wie ein Überschreiten des Soll-Werts durch den Betriebsparameter sein. Für jeden Prozessparameter ist folglich ein Algorithmus zu seiner Anpassung hinterlegt, der sich an der Abweichung des betrachteten Betriebsparameters vom Soll-Wert orientiert. Damit kann die Speicherung von Wertetabellen entfallen. Außerdem kann der Prozessparameter rechnerisch genauer an die per Betriebsparameter erfasste Situation im Heißgetränkezubereitungsgerät angepasst werden. Dadurch lässt sich die Pflegemittellösung exakter an den konkreten Pflegebedarf, also an die Kalkbelastung und/oder den Reinigungsbedarf anpassen.

Die Prozessparameter dienen der Steuerung des Pflegeverfahrens. Sie ersetzten ggf. Standardparameter, die Bestandteil eines Standardprozesses sind. Ausgehend vom Standardprozess lässt sich ein konkretes Pflegeverfahren dem jeweils vorliegenden konkreten Pflegebedarf anpassen. Nach einer weiteren vorteilhaften Ausgestaltung der Erfindung können eine Kontaktzeit und/oder eine Kontaktfläche des Zubereitungswassers und des Pflegemittels als Prozessparameter für den Herstellungsprozess der Pflegemittellösung dienen. Die Kontaktzeit definiert denjenigen Zeitraum, in dem das Zubereitungswasser mit dem trockenen Pflegemittel an Abschnitten seiner Umfangsfläche in Kontakt kommt und es löst. Unter der Voraussetzung eines gleichmäßigen Lösungsverhaltens des Pflegemittels und unter der Voraussetzung, dass die Menge des Zubereitungswassers festgelegt ist, kann die Zeitdauer also ein Maßstab für die Konzentration des gelösten Pflegemittels sein, wonach eine längere Kontaktzeit eine höhere Konzentration bewirkt. Umgekehrt kann auch die Kontaktfläche des Zubereitungswassers mit dem Pflegemittel als Prozessparameter dienen unter der Voraussetzung, dass die Kontaktzeit festgelegt ist. In Kenntnis der geometrischen Größen des Pflegemittelbehälters und des darin als Feststoff eingebrachten Pflegemittels beispielsweise in Tablettenform lässt sich die Kontaktfläche auf eine Füllhöhe des Zubereitungswassers im Pflegemittelbehälter ausdrücken.

Schließlich können sowohl die Kontaktzeit als auch die Kontaktfläche variiert werden, um einen größeren Spielraum für die Variation der Prozessparameter zur Anpassung an den jeweiligen Pflegebedarf zu erhalten.

Eine weitere Voraussetzung der obigen Betrachtung stellt die Temperatur des Zubereitungswassers dar, denn wärmeres Wasser löst Feststoffe regelmäßig schneller als kühleres Wasser. Nach einer weiteren vorteilhaften Ausgestaltung der Erfindung kann daher zusätzlich die Temperatur des dem Pflegemittelvorratsgefäß zugeführten Wassers als Betriebsparameter erfasst und mit einem Prozessparameter berücksichtigt werden. Damit können Umwelteinflüsse auf das Heißgetränkegerät wie eine hohe Zimmertemperatur, ein sonniger Standplatz oder dergleichen erfasst und berücksichtigt werden. Da Heißgetränkezubereitungsgeräte ohnehin über Temperaturfühler verfügen können, braucht dieser Verfahrensschritt noch nicht einmal einen konstruktiven Zusatzaufwand zu erfordern. Selbst bei der Anordnung eines einzigen Temperaturfühlers am Ausgang einer Heizvorrichtung, z. B. als Heizungs-NTC, lässt sich die Temperatur des Zubereitungswassers für die Pflegemittellösung erfassen, indem die Temperatur zumindest des letzten Spülvorgangs bei inaktiver Heizeinrichtung erfasst und herangezogen wird.

Grundsätzlich soll das Durchführen eines Pflegeprozesses die Benutzung des Heißgetränkezubereitungsgeräts möglichst nicht einschränken. Nach einer weiteren vorteilhaften Ausgestaltung der Erfindung kann dem Schritt a), also dem Initiieren der Herstellung einer Pflegemittellösung, ein Schritt 0) vorausgehen, in dem ein Beenden der Getränkeausgabe erfolgt. Das Beenden kann manuell oder automatisch eintreten, zum Beispiel nach Art eines Stand-By-Modus oder eines Schlafmodus. Damit kann das Pflegeverfahren nicht stattfinden, solange der oder mehrere Benutzer noch Getränke beziehen möchten oder könnten und daher das Heißgetränkezubereitungsgerät nicht abgeschaltet haben. Dennoch muss eine regelmäßige und ausreichende Pflege sichergestellt sein. Die frühere Anmeldung desselben Anmelders mit dem amtlichen Aktenzeichen DE 10 2020 207 839 A1 befasst sich mit dem Sicherstellen eines regelmäßigen Pflegevorgangs, indem der Zeitpunkt dafür maschinenseitig an die Benutzungsgewohnheiten des oder der Benutzer angepasst wird, um keine starren oder nutzerungünstigen Zeitpunkte für Pflegevorgänge zu bieten. Um Wiederholungen zu vermeiden, wird der diesbezügliche Inhalt der bereits eingereichten Anmeldung daher auch zum Gegenstand der vorliegenden Anmeldung gemacht.

Der Pflegevorgang kann sowohl ein Entkalken als auch ein Reinigen der fluidführenden Abschnitte und Einrichtungen des Heißgetränkezubereitungsgeräts betreffen, aber ggf. auch nur eine von beiden Vorgängen. Die Entscheidung, welcher von beiden Pflegevorgängen vorgenommen wird, kann für das Entkalken abhängig von der Durchflussmenge und für das Reinigen abhängig von der Anzahl der Getränkebezüge gemacht werden. Nach einer weiteren vorteilhaften Ausgestaltung der Erfindung kann daher noch vor der Herstellung einer Pflegemittellösung in einem Schritt a0) entschieden werden, ob ein und welcher Pflegeprozess eingeleitet wird. Der Schritt a0) geht folglich dem Schritt a) zum Initiieren der Herstellung einer Pflegemittellösung voraus und folgt ggf. dem Schritt 0). Zum Bestimmen der Notwendigkeit eines und welches Pflegevorgangs wird zumindest ein während des Getränkezubereitungsbetriebs erfasster und abgespeicherter Entscheidungsparameter aus dem Datenspeicher abgerufen, mit einem entsprechenden werkseitig definierten Schwellwert verglichen und bei dessen Überschreiten das Pflegeverfahren fortgesetzt. Bei einem Unterschreiten kann das Pflegeverfahren abgebrochen bzw. beendet werden. Einen Anhaltspunkt für eine Benutzungsintensität und einen daraus folgenden Pflegebedarf kann ein Füllstand einer Restwasserschale oder eines Tresterbehälters, die Anzahl an Befüllungen eines Wasservorratsbehälters oder eine Anzahl an hergestellten Tassenportionen bilden. Als zuverlässigerer Entscheidungsparameter kann vorzugsweise die oben bereits erläuterte Durchflussmenge dienen, zumal wenn sie bereits als Betriebsparameter erfasst wurde. Eine verfeinerte Entscheidungshilfe kann das Verhältnis der Durchflussmenge und derjenigen Zeitdauer darstellen, in der die Durchflussmenge verarbeitet wurde. Denn bei geringer Benutzung können sich insbesondere Kalkablagerungen verfestigen, wodurch der Reinigungsaufwand steigen kann. Das Einbeziehen der Zeitdauer führt folglich zu einer realistischeren Erfassung des Pflegeaufwands und damit insbesondere bei zumindest zeitweise wenig genutzten Heißgetränkezubereitungsgeräten zuverlässig zum erwarteten Pflegeerfolg.

Die eingangs genannte Aufgabe wird erfindungsgemäß außerdem durch das im Folgenden beschriebene Verfahren zur Pflege eines Heißgetränkezubereitungsgeräts für den Hausgebrauch, insbesondere eines Kaffeevollautomaten, gelöst, wobei das Heißgetränkezubereitungsgerät einen Wasservorratstank, eine Steuerungseinrichtung, eine Datenspeichereinrichtung und zumindest einen separaten Behälter für Pflegemittel, d.h.. mindestens ein Pflegemittelvorratsgefäß, aufweist. Das erfindungsgemäße Verfahren umfasst zumindest die folgenden Schritte:
a) Initiieren der Herstellung einer Pflegemittellösung im Pflegemittelvorratsgefäß,
b) Abruf eines während des Getränkezubereitungsbetriebs erfassten Betriebsparameters aus der Datenspeichereinrichtung bzw. aus dem Datenspeicher,
c) Berechnen mindestens eines Prozessparameters zur Herstellung der Pflegemittellösung auf Basis des Betriebsparameters,
d') Erstellen der Pflegemittellösung im Pflegemittelvorratsgefäß in einer definierten Menge,
e) Durchführen des Pflegeprozesses unter vollständiger Abgabe der Pflegemittellösung in ein zu pflegendes Leitungssystem des Heißgetränkezubereitungsgeräts.

Die Schritte a), b) und c) entsprechen zumindest sinngemäß den oben bereits erläuterten Verfahrensschritten. Sie und auch die ergänzenden Verfahrensschritte 0), a0), und c1) bis c3) sowie die weiteren Konkretisierungen gemäß den oben bereits erläuterten Unteransprüchen sind auch im vorliegenden Verfahren anwendbar und gelten daher auch ohne Wiederholung im Einzelnen als zum vorliegenden Verfahren zugehörig und als hier anwendbar.

Im Schritt d') dagegen wird erfindungsgemäß statt einer definierten Konzentration nun eine genau definierte Menge an Pflegemittellösung hergestellt, die im Schritt e) im Verlauf des Pflegeprozesses vollständig zugegeben und verbraucht wird. Damit liegt während der Getränkezubereitung keine aggressive und damit potenziell gesundheitsgefährdende Lösung im Heißgetränkezubereitungsgerät vor. Auch dadurch lässt sich die Gefahr einer gesundheitlichen Beeinträchtigung durch eine Pflegemittellösung zum Beispiel infolge von Fehlbedienungen oder von Fehlfunktionen ausschließen.

Beide Verfahren beruhen also auf derselben Idee, nämlich nicht durch aufwändige Berechnungs- oder Messverfahren einerseits oder durch aufwändige Sicherungsmaßnahmen andererseits, sondern durch das Herstellungsverfahren der Pflegemittellösung an sich eine hohe Effizienz des Pflegemitteleinsatzes und eine hohe Sicherheit gegen gesundheitliche Beeinträchtigungen für Benutzer zu schaffen.

Eine noch höhere Effizienz und Sicherheit lässt sich selbstverständlich dadurch erreichen, dass beide Verfahren miteinander kombiniert werden, dass also eine Pflegemittellösung im Pflegemittelvorratsgefäß in einer definierten Konzentration, die signifikant unterhalb der Sättigungskonzentration liegt, gemäß Schritt d) und in einer definierten Menge gemäß Schritt d') hergestellt wird, die im Schritt e) vollständig verbraucht wird.

Die eingangs genannte Aufgabe wird außerdem durch eine Vorrichtung zur Bevorratung mindestens eines festen Pflegemittels gelöst, die insbesondere bei der Durchführung eines der oben erläuterten Verfahrens eingesetzt werden kann. Die erfindungsgemäße Vorrichtung verfügt über genau einen bodenseitigen Anschluss an ein Wasserleitungssystem eines Heißgetränkezubereitungsgeräts, der sowohl als Zuleitung für Zubereitungswasser wie auch als Ableitung für die hergestellte Pflegemittellösung zum Einsatz kommt. Die Erfindung wendet sich also davon ab, die Vorrichtung zur Bevorratung des Pflegemittels nach Art eines Bypasses in das Wasserleitungssystem des Heißgetränkezubereitungsgeräts einzubinden. Sie verfolgt vielmehr das Prinzip, einen Flüssigkeitszu- und -ablauf über ein und denselben Anschluss zu leisten, womit insbesondere eine Oberseite der Vorrichtung für die Anordnung eines bequem bedienbaren Deckels frei bleibt.

Nach einer weiteren vorteilhaften Ausgestaltung der obigen Vorrichtung kann sie einen Vorratsraum für festes Pflegemittel und einen unterhalb des Vorratsraums angeordneten und durch eine flüssigkeitsdurchlässige Trennwand vom Vorratsraum getrennten Abtropfraum aufweisen. Die Trennwand verläuft also weitgehend horizontal und dient als eine Art Aufstellfläche für block- oder tablettenförmiges Pflegemittel. Sie kann mit einer Vielzahl an Durchbrüchen als Sieb, Netz oder Spaltboden ausgebildet sein. In dem Abtropfraum kann infolge des Löseprozesses entstehende Flüssigkeit aufgenommen und ggf. abgeführt werden. Damit kann wasserbenetztes Pflegemittel nach Abschluss des Pflegeverfahrens wieder trocknen.

Nach einer weiteren vorteilhaften Ausgestaltung der obigen Vorrichtung kann sie zwei fluidisch parallel angeordnete Vorratsräume, vorzugsweise auch zwei Abtropfräume und zwei Anschlüsse aufweisen, nämlich für Entkalkungsmittel einerseits und für Reinigungsmittel andererseits. Damit können insbesondere die oben beschriebenen Pflegeverfahren auch ausschließlich der Entkalkung oder der Reinigung dienen.

Die eingangs genannte Aufgabe wird außerdem durch eine Heißgetränkezubereitungsgeräts für den Hausgebrauch, insbesondere durch einen Kaffeevollautomaten gelöst, das eine Wasservorratstank, eine Steuerungseinrichtung, eine Datenspeichereinrichtung und einen oben beschriebenen separaten Behälter für Pflegemittel umfasst und der dazu eingerichtet ist, eines der obigen Pflegeverfahren durchzuführen.

Das Prinzip der Erfindung wird im Folgenden anhand einer Zeichnung beispielshalber noch näher erläutert. In der Zeichnung zeigen:
Figur 1: ein Ablaufdiagramm für eine Ausführungsform des erfinderischen Verfahrens und
Figur 2: einen Pflegemittelbehälter zur Durchführung des Verfahrens.

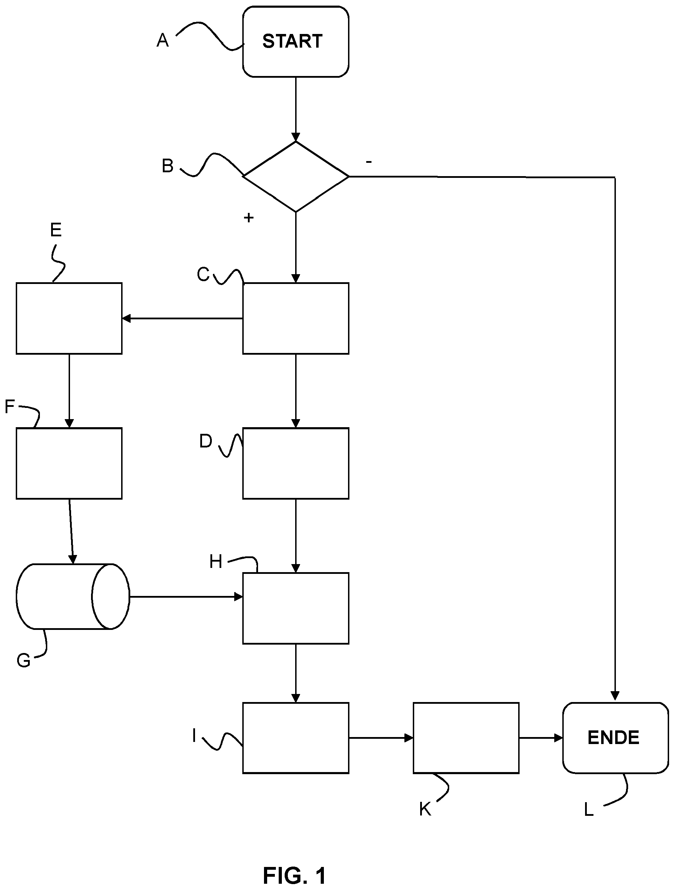

Figur 1 zeigt ein Ablaufdiagramm für eine Ausführungsform des erfinderischen Verfahrens zur Pflege eines Kaffeevollautomaten. Es beginnt demnach mit dessen Abschalten in einem ersten Schritt A, sei es benutzerseitig manuell oder geräteseitig automatisch nach einem vorbestimmten Zeitraum der Nichtbenutzung. Die frühere, zum Anmeldezeitpunkt dieser Anmeldung nicht veröffentlichte Anmeldung mit dem amtlichen Aktenzeichen DE 10 2020 207 839 A1 befasst sich mit dem Sicherstellen eines regelmäßigen Pflegevorgangs. Dazu wird der Zeitpunkt dafür maschinenseitig an die Benutzungsgewohnheiten des oder der Benutzer angepasst, um keine starren oder nutzerungünstigen Zeitpunkte für Pflegevorgänge zu bieten. Der diesbezügliche Inhalt der früheren Anmeldung wird auch zum Inhalt der vorliegenden Anmeldung gemacht.

Das Abschalten des Kaffeevollautomaten ist nicht im Sinne eines sofortigen Stromlos-Schaltens zu verstehen. Vielmehr erhält eine Steuerungseinrichtung des Kaffeevollautomaten zumindest ein Signal, dass er ausgeschaltet werden soll. Für den Benutzer erscheint der daraufhin eingeleitete Gerätezustand zumindest wie ein "Stand-By-Modus" oder Schlafmodus, woraufhin eine Getränkezubereitung jedenfalls vorübergehend nicht mehr möglich ist.

Tatsächlich leitet die Steuerungseinrichtung nun einen Überprüfungsschritt B ein, in dem das Erfordernis eines Pflegevorgangs ermittelt wird. Als Pflegevorgang kann ein Entkalken oder ein Reinigen der fluidführenden Einrichtungen des Kaffeevollautomaten oder beides erforderlich sein. Als Kriterium für oder gegen das Einleiten des Pflegevorgangs dient der Steuerungseinrichtung ein Vergleich zwischen zwei werkseitig eingestellten Schwellwerten und zwei Entscheidungsparametern. Die Entscheidungsparameter wurden vorher während des Zubereitungsbetriebs des Kaffeevollautomaten erfasst und in einem Datenspeicher abgelegt. Sie betreffen einerseits eine Durchflussmenge an Zubereitungswasser, das seit dem letzten Pflegevorgang durch den Kaffeevollautomaten geflossen ist und unter Berücksichtigung der bekannten und geräteseitig voreingestellten Wasserhärte für eine mögliche Verkalkung steht. Sie betreffen andererseits eine absolute Zeitdauer seit dem letzten Pflegevorgang, weil auch stehendes Wasser zum Beispiel Kalkablagerungen fördern und Kalkkrusten begünstigen kann. Je älter aber Kalkkrusten sind, umso höher ist der Aufwand ihrer Beseitigung. Daher sind für einen gezielten Pflegevorgang sowohl die Durchflussmenge als auch der zeitliche Abstand zum letzten Pflegevorgang zu berücksichtigen.

Erforderlichenfalls wird nun im Schritt C der passende Pflegeprozess abgerufen, also ein Entkalkungs- oder ein Reinigungsvorgang oder beides. Dazu werden in Schritt D zum einen jeweils Prozessparameter eines Standardprozesses für eine Entkalkung und/oder Reinigung aus dem Datenspeicher abgerufen, beispielsweise ein Lösemittelvolumen, eine Dosiermenge und/oder eine Prozesszeit. Zum anderen und parallel zum Schritt D wird in einem Schritt E der bereits oben in Schritt B ermittelte Wert für den Durchfluss abgerufen.

In einem weiteren Schritt F wird außerdem die Wassertemperatur des Zubereitungswassers ermittelt, das auch für die Zubereitung einer Pflegemittellösung verwendet wird, also für eine Entkalkungs- und/oder Reinigungslösung. Dazu wird Zubereitungswasser durch eine Heizeinrichtung des Kaffeevollautomaten geleitet, dessen Temperatur ein ausgangsseitiger NTC der Heizeinrichtung erfasst und an die Steuerungseinrichtung weiterleitet. Denn auch die Temperatur des Zubereitungswassers beeinflusst sein Lösungsverhalten und die Wirkung des Pflegemittels.

Der Wert der Durchflussmenge aus dem Schritt E und der im Schritt F erfasste Temperaturwert werden nun zusammen mit einem Standardwert für eine Kontaktzeit aus dem Schritt D in einem Schritt G zu einer neuen, den tatsächlichen Verkalkungs- und/oder Verschmutzungs- und Temperaturverhältnissen im Kaffeevollautomaten angepassten Kontaktzeit verrechnet.

Die Kontaktzeit selbst ist ein relevanter Wert aus einem erfindungsgemäßen Zubereitungsprozess der Pflegemittellösung. Er beschreibt diejenige Zeitspanne, die das Zubereitungswasser im Pflegemittelbehälter mit dem in fester Form vorliegenden Pflegemittel in Kontakt tritt. Die Kontaktzeit ist damit ein Maß für die Konzentration der Pflegemittellösung, durch ihre Variation lässt sich die Konzentration des Pflegemittels variieren. Statt eine konzentrierte Lösung durch Verdünnen auf eine gewünschte Konzentration zu bringen, wird erfindungsgemäß die gewünschte Konzentration durch die Einwirkung von Zubereitungswasser auf das Pflegemittel für eine jeweils errechnete Zeitdauer hergestellt. Sie bewegt sich in einem zeitlichen Rahmen von beispielsweise 10 bis 30 Sekunden. Dieses Vorgehen erfordert zum einen weniger Zubereitungswasser, womit benutzerseitig weniger häufig Wasser nachgefüllt werden muss. Zum anderen liegt dadurch im Kaffeevollautomaten zu keinem Zeitpunkt überhaupt konzentrierte Pflegemittellösung vor. Damit ist die Möglichkeit ausgeschlossen, dass sie durch Fehlfunktionen in wasser- und/oder getränkeführende Abschnitte des Kaffeevollautomaten gelangen könnte. Schließlich lässt sich bei diesem Vorgehen aus dem ausschließlich in fester Form bevorrateten Pflegemittel genau diejenige Menge an Pflegemittellösung herstellen, die bei dem erforderlichen Pflegevorgang verbraucht wird. Damit liegt während des Zubereitungsbetriebs des Kaffeevollautomaten überhaupt keine Pflegemittellösung vor, die bei einer Fehlfunktion zu gesundheitlichen Risiken führen könnte. Das erfindungsgemäße Verfahren trägt folglich entscheidend zu einem auch bei eventuellen Fehlfunktionen sicheren Betrieb des Kaffeevollautomaten bei.

In einem nun folgenden Schritt H wird die neue, für den aktuellen Pflegeprozess individuell berechnete Kontaktzeit für den/die in Schritt C ausgewählten Prozess(e) übernommen. Daraufhin wird in Schritt I der individuelle Pflegeprozess durchgeführt. Nach dessen Abschluss werden in einem Schritt K die Daten für die gespeicherten Werte der Schritte B, nämlich für den Durchfluss und die Zeitdauer seit dem letzten Pflegevorgang, gelöscht. Damit ist das erfindungsgemäße Pflegeverfahren im letzten Schritt L abgeschlossen, woraufhin der Kaffeevollautomat zum Beispiel endgültig ausgeschaltet werden kann.

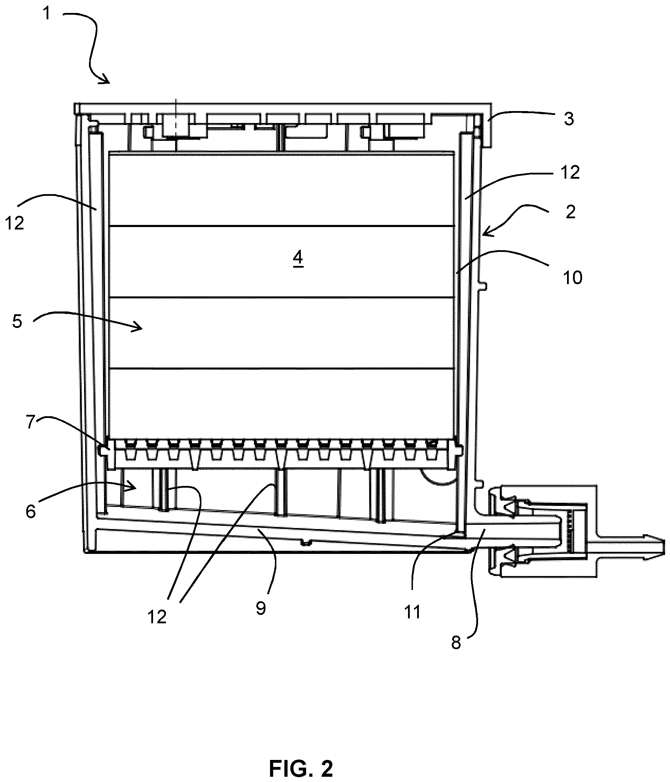

Figur 2 zeigt einen Pflegemittelbehälter 1, im Folgenden auch als Pflegemittelvorratsgefäß 1 bezeichnet, zur Durchführung des oben beschriebenen Pflegeverfahrens. Er besteht aus einem becher- bzw. quaderförmigen Gehäuse 2 mit einem oberseitigen, benutzerseitig bedienbaren Deckel 3 zum Einfüllen festen Pflegemittels 4 in das Gehäuse 2. Das Gehäuse 2 unterteilt sich in einen Vorratsraum 5 und einen Abtropfraum 6. In dem Vorratsraum 5 lässt sich das Pflegemittel 4 in Tablettenform übereinanderstapeln. Die eingesetzten Tabletten 4 liegen mit einem Abstand 10 zum Gehäuse 2 im Vorratsraum 5. Dazu halten innenseitige, vertikal verlaufende Rippen 12 die Tabletten 4 auf Distanz zum Gehäuse 2. Unterhalb des Vorratsraums 5 ist der Abtropfraum 6 angeordnet, den ein flüssigkeitsdurchlässiges Sieb als Trennboden 7 vom Vorratsraum 5 abtrennt.

Das Gehäuse 2 verfügt über einen bodenseitigen Anschluss 8 an ein Wasserleitungssystem des Kaffeevollautomaten. Der Anschluss 8 mündet in den Abtropfraum 6, steht also nur über ihn und durch das Sieb 7 hindurch mit dem Vorratsraum 5 des Gehäuses 2 in fluidischer Verbindung. Der Boden 9 des Abtropfraums 6 ist geneigt und geht an seiner tiefsten Stelle 11 in den Anschluss 8 über.

Zur Zubereitung einer Pflegemittellösung gemäß dem oben beschriebenen Verfahren leitet eine Pumpe des Kaffeevollautomaten über den Anschluss 8 Zubereitungswasser von einer Unterseite aus in den Pflegemittelbehälter 1 ein. Es strömt in den Abtropfraum 6, bis es durch das Sieb 7 hindurch in den Vorratsraum 5 gelangt, um das dort in fester Form vorliegende Pflegemittel 4 zu lösen. Dabei kontaktiert das Zubereitungswasser das Pflegemittel 4 nicht nur von dessen Auflagefläche aus, mit der es auf dem Sieb 7 aufliegt. Das Zubereitungswasser füllt auch den Abstand 10 zwischen dem Pflegemittel 4 und dem Gehäuse 2, so dass es das Pflegemittel 4 auch umfangsseitig kontaktiert. Nach Auflösen des Pflegemittels 4 saugt die Pumpe die nun entstandene Pflegemittellösung durch den Anschluss 8 hindurch ab, von wo aus es in die zu reinigenden Abschnitte des Kaffeevollautomaten geleitet wird.

Erfindungsgemäß zielt das oben beschriebene Verfahren auf die Herstellung einer genau auf die jeweilige Verschmutzungssituation abgestimmten Konzentration der Pflegemittellösung ab. Dazu nutzt es unterschiedliche Parameter zur Einstellung der Konzentration: Das Volumen des Vorratsraums 5 und des Abtropfraums 6 sind bekannt. Da die äußere Form des als Feststoff vorliegenden Pflegemittels 4 vorgegeben ist, kann von dessen Auflagefläche und von dessen Mantelfläche als bekannten Größen ausgegangen werden.

Das Verfahren kann nun die Einstellung der Konzentration der Pflegemittellösung allein durch die Zufuhr von Zubereitungswasser und dessen Aufenthaltsdauer im Pflegemittelbehälter 1 steuern. Grundsätzlich ist das Volumen an einzuleitendem Zubereitungswasser eine ausschlaggebende Größe. Das Gehäuse 2 und im Einzelnen der Vorratsraum 5 und der Abtropfraum 6 sind derart ausgelegt, dass bei gefülltem Vorratsraum 5 ein für einen einzelnen Pflegevorgang ausreichendes Volumen an Zubereitungswasser eingefüllt werden kann. Damit ist der Füllstand bzw. die Füllhöhe des Vorratsraums 5 bei der Herstellung einer Charge an Pflegemittellösung weitgehend festgelegt. Über die Füllhöhe des Zubereitungswassers im Vorratsraum 5 lässt sich eine Kontaktfläche zwischen dem Zubereitungswasser und dem Pflegemittel 4 bestimmen. Je größer die Kontaktfläche, desto stärker ist die Konzentration der Pflegemittellösung bei im Übrigen unveränderten Größen zu erwarten. Neben der per Füllstand weitgehend vorgegebenen Kontaktfläche lässt sich nun noch die Verweilzeit des Zubereitungswassers im Pflegemittelbehälter 1 variieren und mit ihr eine Kontaktzeit, während der das Zubereitungswasser in lösendem Kontakt mit dem Pflegemittel 4 steht. Soll die Konzentration der Pflegemittellösung statt über die Kontaktzeit über die Kontaktfläche variiert werden, ergibt sich eine variierende Menge an Pflegemittellösung. Dadurch kann unter Umständen zu viel oder zu wenig Pflegemittellösung bereitstehen, was im ersten Fall die eingesetzten Stoffe unnötig verbrauchen und im zweiten Fall einen zweiten Zubereitungsvorgang erfordern könnte. Daher ist das Variieren der Kontaktzeit in der Regel eine günstigere Möglichkeit, die gewünschte Konzentration der Pflegemittellösung herzustellen. Jedenfalls lässt sich damit regelmäßig der geringste Verbrauch an Zubereitungswasser und ggf. auch an Pflegemittel erreichen, was Bedienungsvorteile und geringere Unterhaltskosten mit sich bringt.

Da es sich bei dem vorhergehenden, detailliert beschriebenen Verfahren und dem Pflegemittelbehälter um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen des Pflegemittelbehälters in anderer Form als in der hier beschriebenen erfolgen, beispielsweise mit einem Behälter für Entkalkungsmittel und einem fluidisch parallel angeschlossenen und im Übrigen identischen Behälter für Reinigungsmittel. Ebenso kann das Gehäuse in einer anderen Form ausgestaltet werden, wenn dies aus Platzgründen bzw. gestalterischen Gründen notwendig ist. Weiterhin schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Behälter, der als Pflegemittelvorratsgefäß ausgebildet ist
- 2: Gehäuse
- 3: Deckel
- 4: Pflegemittel
- 5: Vorratsraum
- 6: Abtropfraum
- 7: Trennwand
- 8: Anschluss
- 9: Boden
- 10: Abstand
- 11: tiefste Stelle

## Patentansprüche

1. Verfahren zur Pflege eines Heißgetränkezubereitungsgeräts für den Hausgebrauch, insbesondere eines Kaffeevollautomaten, mit einem Wasservorratstank, mit einer Steuerungseinrichtung, mit einer Datenspeichereinrichtung und mit einem separaten Behälter für Pflegemittel, der als Pflegemittelvorratsgefäß ausgebildet ist, mit den folgenden Schritten:
a) Initiieren der Herstellung einer Pflegemittellösung in dem separaten Behälter,
b) Abruf eines während des Getränkezubereitungsbetriebs erfassten Betriebsparameters,
c) Berechnen mindestens eines Prozessparameters zur Herstellung der Pflegemittellösung auf Basis des Betriebsparameters,
d) Erstellen der Pflegemittellösung im Pflegemittelvorratsgefäß mit einer definierten Konzentration des Pflegemittels, die signifikant unterhalb der Sättigungskonzentration liegt,
e) Durchführen des Pflegeprozesses unter Zugabe der Pflegemittellösung in ein Leitungssystem des Heißgetränkezubereitungsgeräts.

2. Verfahren nach Anspruch 1 **dadurch gekennzeichnet, dass** die Berechnung des mindestens einen Prozessparameters in Schritt c) in den folgenden Teilschritten erfolgt:
c1) Abruf zumindest eines werkseitig hinterlegten Standardparameters,
c2) Vergleich des mindestens einen Betriebsparameters mit einem Soll-Wert,
c3) Ermitteln des mindestens einen Prozessparameters aus dem Vergleich in Schritt c2).

3. Verfahren nach Anspruch 2 **gekennzeichnet durch** eine Kontaktzeit und/oder eine Kontaktfläche des Wassers und des Pflegemittels als Prozessparameter.

4. Verfahren nach dem obigen Anspruch, **dadurch gekennzeichnet, dass** zusätzlich die Temperatur des dem Pflegemittelvorratsgefäß zugeführten Wassers erfasst und berücksichtigt wird.

5. Verfahren nach einem der obigen Ansprüche, **dadurch gekennzeichnet, dass** Schritt a) auf ein manuelles oder automatisches Beenden der Getränkeausgabe in einem vorangehenden Schritt 0) folgt.

6. Verfahren nach einem der obigen Ansprüche, **gekennzeichnet durch** einen dem Schritt a) vorausgehenden Schritt a0) zur Bestimmung der Notwendigkeit eines Pflegevorgangs, indem zumindest ein während des Getränkezubereitungsbetriebs erfasster Entscheidungsparameter abgerufen, mit einem werkseitig definierten Schwellwert verglichen und bei dessen Überschreiten das Pflegeverfahren fortgesetzt und bei Unterschreiten das Pflegeverfahren abgebrochen wird.

7. Verfahren zur Pflege eines Heißgetränkezubereitungsgeräts für den Hausgebrauch, insbesondere eines Kaffeevollautomaten, mit einem Wasservorratstank, mit einer Steuerungseinrichtung, mit einer Datenspeichereinrichtung und mit einem separaten Behälter für Pflegemittel, der als Pflegemittelvorratsgefäß ausgebildet ist, insbesondere nach einem der obigen Ansprüche, mit den folgenden Schritten:
a) Initiieren der Herstellung einer Pflegemittellösung im Pflegemittelvorratsgefäß,
b) Abruf eines während des Getränkezubereitungsbetriebs erfassten Betriebsparameters aus der Datenspeichereinrichtung bzw. aus dem Datenspeicher,
c) Berechnen mindestens eines Prozessparameters zur Herstellung der Pflegemittellösung auf Basis des Betriebsparameters,
d') Erstellen der Pflegemittellösung im Pflegemittelvorratsgefäß in einer definierten Menge,
e) Durchführen des Pflegeprozesses unter vollständiger Abgabe der Pflegemittellösung in ein zu pflegendes Leitungssystem des Heißgetränkezubereitungsgeräts.

8. Vorrichtung zur Bevorratung mindestens eines festen Pflegemittels (4), zur Durchführung eines Verfahrens nach einem der obigen Ansprüche, **gekennzeichnet durch** genau einen bodenseitigen Anschluss (8) an ein Wasserleitungssystem eines Heißgetränkezubereitungsgeräts.

9. Vorrichtung nach Anspruch 8, mit einem Vorratsraum (5) für festes Pflegemittel (4) **gekennzeichnet durch** einen unterhalb des Vorratsraums (5) angeordneten und durch eine flüssigkeitsdurchlässige Trennwand (7) vom Vorratsraum getrennten Abtropfraum (6).

10. Heißgetränkezubereitungsgeräts für den Hausgebrauch, insbesondere Kaffeevollautomat, mit einem Wasservorratstank, mit einer Steuerungseinrichtung, mit einer Datenspeichereinrichtung und mit einem separaten Behälter für Pflegemittel nach Anspruch 8 oder 9, der eingerichtet ist zur Durchführung eines Verfahrens nach einem der Ansprüche 1 bis 7.
